# EUROPÄISCHE PATENTSCHRIFT

(11) **EP 1 109 996 B1**
(45) Veröffentlichungstag und Bekanntmachung des Hinweises auf die Patenterteilung: **10.12.2003**
(21) Anmeldenummer: 99942907.9
(22) Anmeldetag: 24.08.1999
(51) Int. Cl.: F02B 61/06, B60K 5/02, B60K 17/22, B60K 17/16, F02B 75/22

(54) **ANTRIEBSANORDNUNG FÜR EIN FAHRZEUG**
DRIVE ARRANGEMENT FOR A VEHICLE
ENSEMBLE MOTEUR POUR VEHICULE

(30) Priorität: 05.09.1998 DE 19840661
(43) Veröffentlichungstag der Anmeldung: 27.06.2001
(73) Patentinhaber: Volkswagen Aktiengesellschaft, 38436 Wolfsburg (DE)
(72) Erfinder: LAGIES, Dietmar, D-38124 Braunschweig (DE)
(74) Vertreter: Zeitler - Dickel - Kandlbinder
(86) Internationale Anmeldenummer: EP9906198
(87) Internationale Veröffentlichungsnummer: WO00014391

(56) Entgegenhaltungen:
- DE-A- 3 920 638
- GB-A- 378 489
- US-A- 3 150 543
- US-A- 3 489 237
- US-A- 5 231 894
- US-A- 5 339 918

## Beschreibung

Die Erfindung betrifft eine Antriebsanordnung für ein Fahrzeug, insbesondere für ein Kraftfahrzeug, mit einem Antriebsaggregat umfassend ein Kurbelgehäuse, welches einseitig von einer Ölwanne abgeschlossen ist, wobei Ölwanne und Kurbelgehäuse eine gemeinsame Verbindungsebene aufweisen und die Ölwanne einen in diese hineinragenden Einzug eines Abschnitts einer Seitenwandung, welcher zur Aufnahme eines Ausgleichsgetriebes ausgebildet ist, sowie eine Öffnung für eine aus dem Ausgleichsgetriebe herausragende Achswelle aufweist, gemäß dem Oberbegriff des Anspruchs 1.

Aus der Zeitschrift mot-SPEZIAL, 1991, Seite 60 ist eine gattungsgemäße Antriebsanordnung bekannt, wobei eine Achswelle eines rechten, angetriebenen Vorderrades quer durch die Ölwanne verläuft und an einer Seite gegenüber dem Ausgleichsgetriebe durch eine Wandung der Ölwanne hindurch stößt Diese Anordnung ist jedoch aufwendig, da an der Durchstoßstelle der Achswelle entsprechende Anbauten zum Abdichten dieser Durchstoßstelle vorgesehen sein müssen.

Aus der DE 3920638 C2 ist ein Antriebssystem für ein Fahrzeug bekannt, bei dem die Ausgangsleistung des Motors über eine Kupplung, ein Getriebe und eine Kardanwelle auf das Differential und von diesem über eine Zwischenwelle, eine Kardangelenk, eine Antriebswelle und ein weiteres Kardangelenk auf ein in bezug auf das Differential auf der anderen Motorseite befindliches Antriebsrad übertragen wird. Die Ausgangsleistung wird weiterhin vom Differential Ober ein Kardangelenk, eine Antriebswelle und ein weiteres Kardangelenk auf ein in bezug auf das Differential auf der gleichen Motorseite befindliches Antriebsrad übertragen. Hierbei verläuft die Zwischengetriebewelle durch beide Seitenwände des Kurbelgehäuseunterteils. Die Zwischengetriebewelle ist daher nicht in der Schürze der Zylinder Box gelagert, so daß diese kompakt und vereinfacht aufgebaut sein kann, vorzugsweise im wesentlichen wie für einen Zylinderblock für einen Motor ohne Zylinderblockneigung.

Aus der DE 42 06 068 A1 ist eine Motoreinheit mit einem Motor und einem Getriebe bekannt, wobei eine gemeinsame Ölwanne für den Motor und das Getriebe an einer Unterseite des Motors vorgesehen ist.

Die EP 0 189 013 A1 beschreibt eine Antriebsanordnung für eine Zugmaschine, wobei ein Ausgleichsgetriebe einer angetriebenen Vorderachse, eine Kupplung eines Allradantriebes und weitere Elemente des Vorderachsantriebs in eine Ölwanne integriert sind.

Alle vorgenannten Systeme haben jedoch den Nachteil, daß sich zumindest eine Achswelle aus dem Ausgleichsgetriebe heraus vollständig durch die Ölwanne erstreckt und somit eine entsprechende Vielzahl von Wandungsdurchbrüchen in der Ölwanne vorgesehen sein müssen. Der entsprechend zu einer Abdichtung dieser Wandungsdurchbruche in der Ölwanne erforderliche Aufwand führt zu erhöhtem Herstellung- und Wartungsaufwand und entsprechend erhöhten Kosten.

Der vorliegenden Erfindung liegt daher die Aufgabe zugrunde, eine verbesserte Antriebsanordnung der obengenannten Art zur Verfügung zu stellen, wobei die obengenannten Nachteile bei noch kompakterer Bauweise überwunden werden.

Diese Aufgabe wird erfindungsgemäß durch eine Antriebsanordnung der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß die Ölwanne einen in diese hineinragenden Einzug eines Abschnitts einer Seitenwandung aufweist, welche zur Aufnahme eines Ausgleichsgetriebes ausgebildet ist und eine Öffnung für eine aus dem Ausgleichsgetriebe herausragende Achswelle aufweist, wobei eine Mittelachse der Öffnung durch das Kurbelgehäuse hindurch verläuft.

Dies hat den Vorteil, daß eine kompakte Bauform erzielt ist, wobei gleichzeitig eine sich durch die Öffnung in den Innenraum der Ölwanne erstreckende Achswelle des Ausgleichsgetriebes nicht durch eine Seitenwandung der Ölwanne sondern durch das Kurbelgehäuse herausführbar ist

Eine gegen die Ölwanne abgeschlossene Führung der Achswelle erzielt man dadurch, daß im Kurbelgehäuse ein mit der Öffnung fluchtendes, die durch die Öffnung ragende Achswelle umgebendes Führungsmittel vorgesehen ist.

Für eine weitere Erhöhung einer Baudichte von Elementen der Antriebsanordnung ist in besonders vorteilhafter Weise eine weitere Einziehung eines Wandungsabschnittes der Ölwanne in diese hinein vorgesehen, welche zur wenigstens teilweisen Aufnahme eines Nebenaggregats, insbesondere eines Generators, ausgebildet ist.

Für eine enge, kompakte und bauraumsparende Anordnung des Getriebes nahe der Ölwanne ist in der Wandung der Ölwanne eine Öffnung für eine Abtriebswelle eines Getriebes vorgesehen, wobei ein weiterer Einzug der Wandung der Ölwanne vorgesehen ist, welcher die Öffnung mit dem Einzug für das Ausgleichsgetriebe verbindet.

Zur vollständigen Aufnahme der zum Ausgleichsgetriebe führenden Abtriebswelle des Getriebes und für eine Kapselung gegen den Innenraum der Ölwanne ist der die Öffnung mit dem Einzug für das Ausgleichsgetriebe verbindende Einzug zylinderförmig ausgebildet

In einer bevorzugten Ausführungsform ist die Ölwanne im Querschnitt im wesentlichen dreieckig ausgebildet.

Zweckmäßigerweise erstreckt sich die Mittelachse der Öffnung durch einen Teil des Kurbelgehäuses, welcher als Lagertraverse zwischen Ölwanne und Kurbelgehäuse ausgebildet ist.

Weitere Merkmale, Vorteile und vorteilhafte Ausgestattungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Antriebsanordnung in perspektivischer Ansicht,
- Fig. 2: in einer weiteren perspektivischen Ansicht und
- Fig. 3 - 6: verschiedene perspektivische Ansichten einer erfindungsgemäß ausgebildeten Ölwanne.

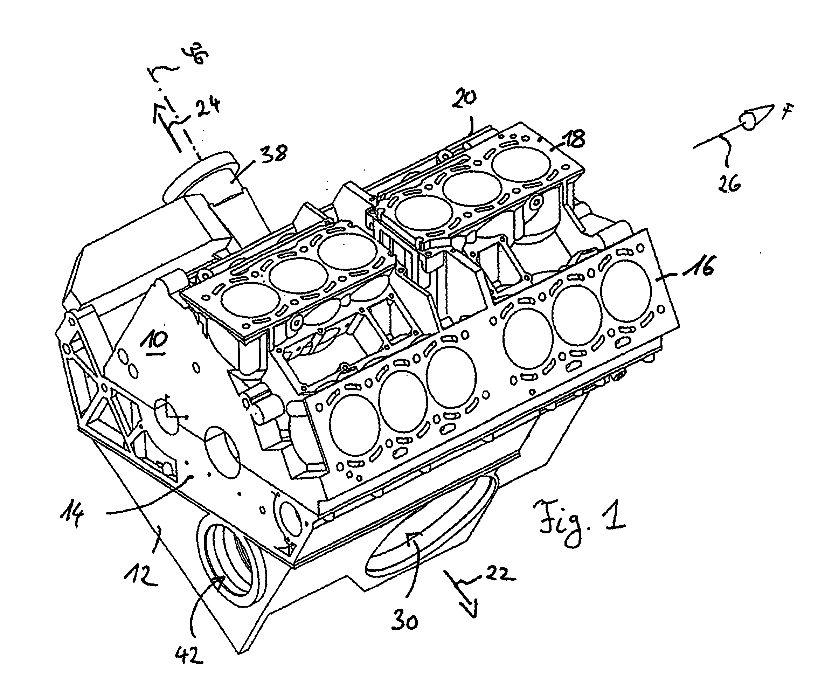

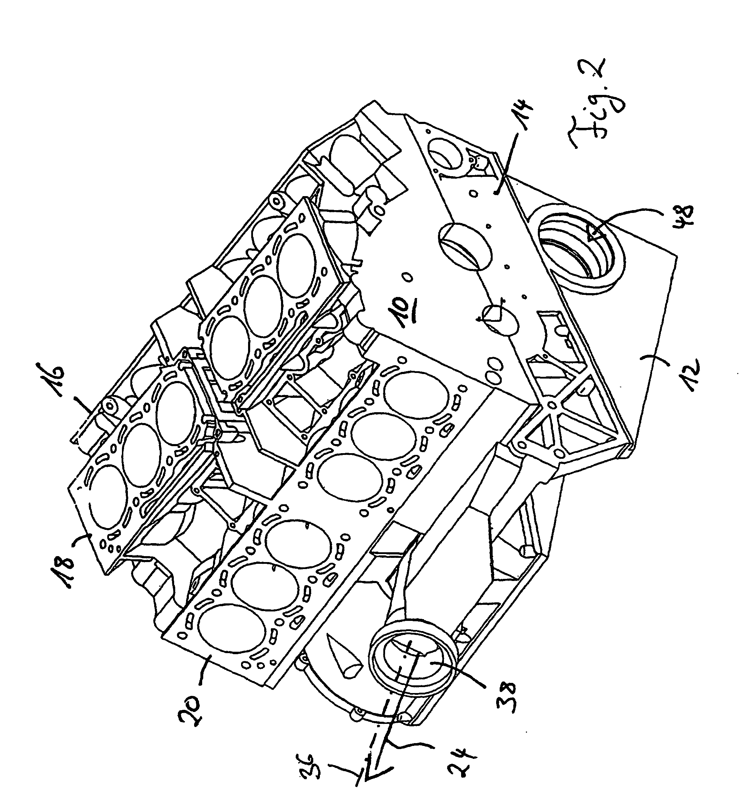

Die in Fig. 1 und 2 dargestellte bevorzugte Ausführungsform einer erfindungsgemäßen Antriebsanordnung umfaßt ein Kurbelgehäuse 10 und eine Ölwanne 12, wobei ein unterer Teil des Kurbelgehäuses 10 ölwannenseitig als Lagertraverse 14 ausgebildet ist. Das Kurbelgehäuse 10 umfaßt in der beispielhaft dargestellten Ausführungsform drei Zylinderbänke 16, 18 und 20, wobei jedoch eine andere Anzahl von Zylinderbänken oder eine andere Anordnung der Zylinder möglich ist.

In Richtung des Pfeiles 22 befindet sich ein nicht dargestelltes rechtes, angetriebenes Rad und in Richtung des Pfeiles 24 befindet sich ein nicht dargestelltes linkes angetriebenes Rad, ein Pfeil 26 in Fig. 1 bezeichnet eine Fahrtrichtung.

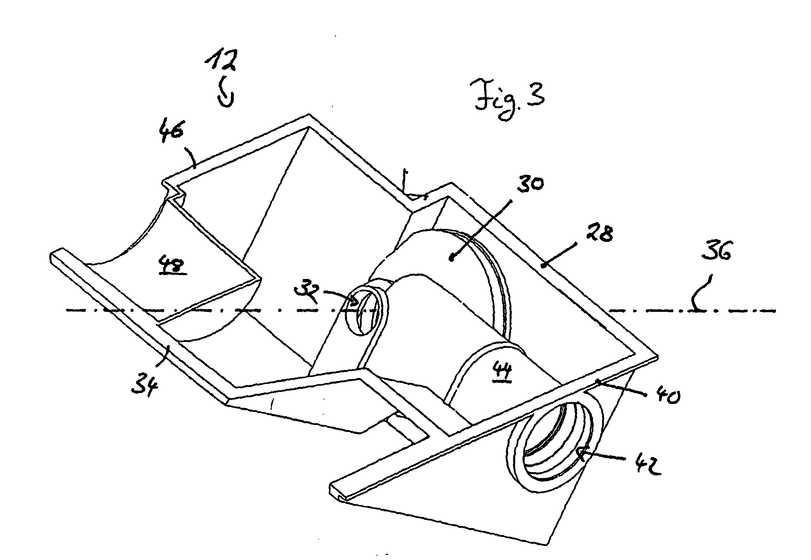

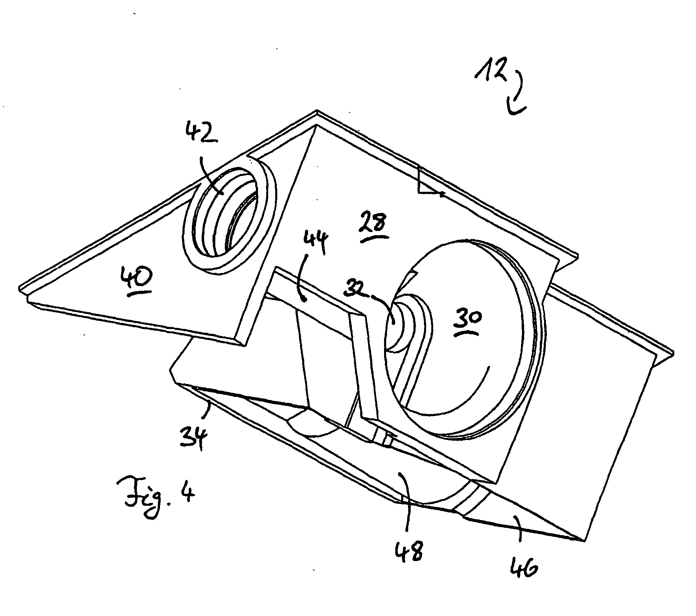

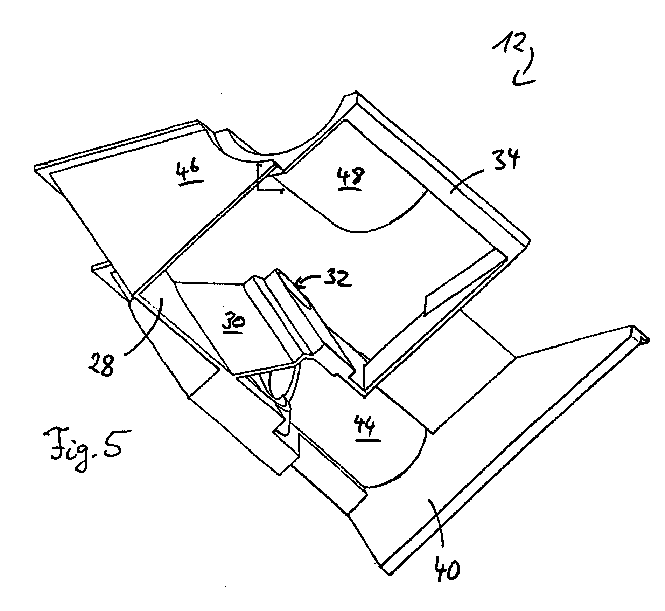

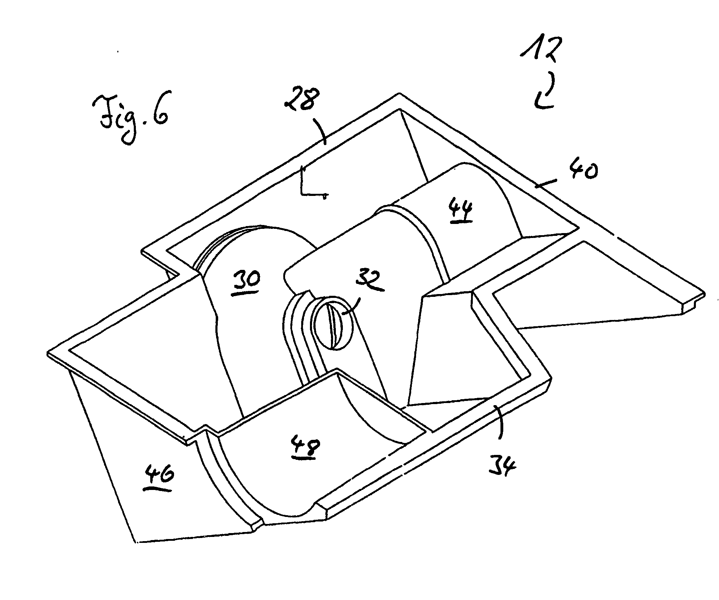

Die erfindungsgemäße Ausbildung der Ölwanne 12 ist im Detail aus den Fig. 3 bis 6 ersichtlich, wobei sich die nachfolgenden Ausführungen auf alle Figuren 1 bis 6 beziehen.

In einer Seitenwandung 28 der Ölwanne 12 ist eine Einziehung bzw. Einbuchtung 30 derart ausgebildet, daß in dieser ein nicht dargestelltes Ausgleichs- oder Differentialgetriebe anordenbar ist. Eine der aus dem Ausgleichsgetriebe herausragenden, nicht dargestellten Achswellen erstreckt sich durch eine Öffnung 32 in der Einbuchtung 30 in einen Innenraum der Ölwanne 12 hinein. Die Ölwanne 12 ist kurbelgehäuseseitig offen, wobei diese offene Seite eine gemeinsame Verbindungsebene mit dem Kurbelgehäuse ausbildet. Die Öffnung 32 ist dabei derart ausgebildet, daß eine Mittelachse 36 derselben nicht eine gegenüberliegende Wandung 34 der Ölwanne 12 schneidet, sondern sich durch die Verbindungsebene Ölwanne-Kurbelgehäuse erstreckt. Um diese Mittelachse 36 herum ist kurbelgehäuseseitig eine Führung in Form eines Halses 38 (Fig. 1 und 2) vorgesehen, welche mit der Öffnung 32 fluchtet und eine Führung der entsprechenden Achswelle zur Verfügung stellt. Diese Achswelle, die sich durch die Öffnung 32 hindurch erstreckt, ist somit nicht durch die Ölwanne 12 sondern durch das Kurbelgehäuse 10 nach außen geführt. Hierbei ist der Hals 38 zweckmäßigerweise derart ausgebildet, daß er sich in die Ölwanne 12 hinein bis zur Öffnung 32 und an diese anschlagend erstreckt. Dies schafft eine entsprechende Kapselung der Achswelle gegen die Ölwanne 12.

An einer Wandung 40 der Ölwanne 12 ist eine Öffnung 42 ausgebildet, welche Ober eine tunnelartige Einziehung bzw. Einbuchtung 44 in der Ölwanne 12 mit der Einbuchtung 30 in Verbindung steht. Durch diese Öffnung 42 und die Einziehung 44 hindurch erstreckt sich eine nicht dargestellte Abtriebswelle eines nicht dargestellten Getriebes in das Ausgleichsgetriebe in der Einbuchtung 30, wobei die Einziehung 44 die Abtriebswelle gegen die Ölwanne kapselt.

An einer Seitenwandung 46 der Ölwanne 12 ist eine weitere Einziehung oder Einbuchtung 48 vorgesehen, welche zur wenigstens teilweisen Aufnahme eines nicht dargestellten Nebenaggregates, wie beispielsweise eines Generators, ausgebildet ist. Ober entsprechende, nicht dargestellte Stichbohrungen, beispielsweise zu- einem nicht dargestellten Kühlwasserkanal der dritten Zylinderbank 20, ist vorzugsweise eine Kühlwasserversorgung des in der Einbuchtung 48 angeordneten Nebenaggregates vorgesehen.

## Patentansprüche

1. Antriebsanordnung für ein Fahrzeug, insbesondere für ein Kraftfahrzeug, mit einem Antriebsaggregat umfassend ein Kurbelgehäuse (10), welches einseitig von einer Ölwanne (12) abgeschlossen ist, wobei Ölwanne und Kurbelgehäuse eine gemeinsame Verbindungsebene ausweisen und die Ölwanne (12) einen in diese hinein ragenden Einzug (30) eines Abschnitts einer Seitenwandung (28), welcher zur Aufnahme eines Ausgleichsgetriebes ausgebildet ist, sowie eine Öffnung (32) für eine aus dem Ausgleichsgetriebe herausragende Achswelle aufweist, wobei eine Mittelachse (36) der Öffnung (32) durch die Verbindungsebene hindurch verläuft,
**dadurch gekennzeichnet, daß**
in einer Wandung (40) der Ölwanne (12) eine Öffnung (42) für eine Abtriebswelle eines Getriebes vorgesehen ist, wobei eine tunnelartige Einziehung (44) der Wandung der Ölwanne (12) vorgesehen ist, welche die Öffnung (42) mit dem Einzug (30) für das Ausgleichsgetriebe verbindet, wobei die tunnelartige Einziehung (44) derart ausgebildet ist, daß sie die Abtriebswelle gegen die Ölwanne kapselt.

2. Antriebsanordnung nach Anspruch 1,
**dadurch gekennzeichnet, daß**
im Kurbelgehäuse (10) ein mit der Öffnung (32) fluchtendes, die durch die Öffnung (32) ragende Achswelle umgebendes Führungsmittel (38) vorgesehen ist.

3. Antriebsanordnung nach Anspruch 1 oder 2,
**dadurch gekennzeichnet, daß**
eine weitere Einziehung (48) eines Wandungsabschnittes (46) der Ölwanne (12) in diese hinein vorgesehen ist, welche zur wenigstens teilweisen Aufnahme eines Nebenaggregats, insbesondere eines Generators, ausgebildet ist.

4. Antriebsanordnung nach einem der vorhergehenden Ansprüche,
**dadurch gekennzeichnet, daß**
die die Öffnung (42) mit dem Einzug (30) für das Ausgleichsgetriebe verbindende tunnelartige Einziehung (44) zylinderförmig ausgebildet ist.

5. Antriebsanordnung nach einem der vorhergehenden Ansprüche,
**dadurch gekennzeichnet, daß**
die Ölwanne (12) im Querschnitt im wesentlichen dreieckig ausgebildet ist.

6. Antriebsanordnung nach einem der vorhergehenden Ansprüche,
**dadurch gekennzeichnet, daß**
sich die Mittelachse (36) der Öffnung (32) durch einen Teil des Kurbelgehäuses (10) erstreckt, welcher als Lagertraverse (14) zwischen Ölwanne (12) und Kurbelgehäuse (10) ausgebildet ist.

## Claims

1. Drive arrangement for a vehicle, in particular for a motor vehicle, having a drive assembly comprising a crankcase (10) which is enclosed on one side by an oil sump (12), the oil sump and the crankcase having a common connecting plane and the oil sump (12) having a recess (30), extending into the said oil sump, in a section of a side wall (28), which recess is designed to accommodate a differential gear, and the oil sump (12) also having an opening (32) for an axle shaft protruding out of the differential gear, a central axis (36) of the opening (32) extending through the connecting plane, **characterized in that** an opening (42) for an output shaft of a gear mechanism is provided in a wall (40) of the oil sump (12), a tunnel-like drawn-in section (44) of the wall of the oil sump (12) being provided which connects the opening (42) to the recess (30) for the differential gear, the tunnel-like drawn-in section (44) being configured such that it encapsulates the output shaft from the oil sump.

2. Drive arrangement according to Claim 1, **characterized in that** there is provided in the crankcase (10) a guide means (38) which is aligned with the opening (32) and surrounds the axle shaft protruding through the opening (32).

3. Drive arrangement according to Claim 1 or 2, **characterized in that** a further drawn-in section (48) of a wall section (46) of the oil sump (12) is provided in the latter, which drawn-in section is designed to at least partially accommodate an auxiliary unit, in particular a generator.

4. Drive arrangement according to one of the preceding claims, **characterized in that** the tunnel-like drawn-in section (44) which connects the opening (42) to the recess (30) for the differential gear is of cylinder-shaped configuration.

5. Drive arrangement according to one of the preceding claims, **characterized in that** the cross section of the oil sump (12) is configured to be substantially triangular.

6. Drive arrangement according to one of the preceding claims, **characterized in that** the central axis (36) of the opening (32) extends through a part of the crankcase (10) which is configured as a bearing crossmember (14) between the oil sump (12) and crankcase (10).

## Revendications

1. Ensemble moteur pour un véhicule, en particulier un véhicule automobile, comprenant une unité d'entraînement comprenant un carter moteur (10), qui est fermé d'un côté par un carter d'huile (12), le carter d'huile et le carter moteur présentant un plan d'assemblage commun et le carter d'huile (12) présentant un renfoncement (30) d'une portion d'une paroi latérale (28), saillant dans ceux-ci, lequel est réalisé pour recevoir un engrenage différentiel, ainsi qu'une ouverture (32) pour un arbre d'essieu saillant hors de l'engrenage différentiel, un axe médian (36) de l'ouverture (32) traversant le plan d'assemblage,
**caractérisé en ce que**
l'on prévoit, dans une paroi (40) du carter d'huile (12), une ouverture (42) pour un arbre de sortie d'une boîte de vitesses, un retrait en forme de tunnel (44) de la paroi du carter d'huile (12) étant prévu, lequel relie l'ouverture (42) au renfoncement (30) pour l'engrenage différentiel, le retrait en forme de tunnel (44) étant conçu de telle sorte qu'il encapsule l'arbre de sortie contre le carter d'huile.

2. Ensemble moteur selon la revendication 1,
**caractérisé en ce que**
l'on prévoit, dans le carter moteur (10), un moyen de guidage (38) aligné avec l'ouverture (32), entourant l'arbre d'essieu saillant à travers l'ouverture (32).

3. Ensemble moteur selon la revendication 1 ou 2,
**caractérisé en ce que**
l'on prévoit un autre retrait (48) d'une portion de paroi (46) du carter d'huile (12) dans ce dernier, lequel est réalisé pour recevoir au moins en partie une unité auxiliaire, en particulier un générateur.

4. Ensemble moteur selon l'une quelconque des revendications précédentes, **caractérisé en ce que**
le retrait (44) en forme de tunnel reliant l'ouverture (42) au retrait (30) pour l'engrenage différentiel est réalisé en forme de cylindre.

5. Ensemble moteur selon l'une quelconque des revendications précédentes, **caractérisé en ce que**
le carter d'huile (12) est réalisé avec une forme essentiellement triangulaire en section transversale.

6. Ensemble moteur selon l'une quelconque des revendications précédentes,
**caractérisé en ce que**
l'axe médian (36) de l'ouverture (32) s'étend à travers une partie du carter moteur (10) qui est réalisée sous forme de traverse de support (14) entre le carter d'huile (12) et le carter moteur (10).
